# EUROPEAN PATENT APPLICATION

(11) **EP 4 614 648 A1**
(43) Date of publication of application: **10.09.2025**
(21) Application number: 23885726.2
(22) Date of filing: 30.10.2023
(51) Int. Cl.: H01M 10/0567, C08L 101/12, H01M 4/133, H01M 4/62, H01M 10/052, H01M 10/058

(54) **ELECTROLYTE FOR NON-AQUEOUS ELECTROLYTE SECONDARY BATTERY, NON-AQUEOUS ELECTROLYTE SECONDARY BATTERY, AND METHOD FOR MANUFACTURING NON-AQUEOUS ELECTROLYTE SECONDARY BATTERY**

(30) Priority: 31.10.2022 JP 2022175036
(71) Applicant: FUJIFILM Corporation, Tokyo 106-8620 (JP)
(72) Inventor: OGAWA, Taiki, Minamiashigara-shi, Kanagawa 250-0193 (JP)
(74) Representative: HGF
(86) International application number: PCT/JP2023/039134
(87) International publication number: WO 2024/095972

(57) **Abstract**

Provided are an electrolytic solution for a non-aqueous electrolytic solution secondary battery, obtained by dissolving a lithium salt and a polymer (I) in a non-aqueous solvent, in which the polymer (I) has an adsorption rate of 15% or more to acetylene black and a weight-average molecular weight of 1,000 to 150,000, and a content of the polymer (I) in the electrolytic solution is 0.1% to 5.0% by mass; and a non-aqueous electrolytic solution secondary battery and a manufacturing method thereof, using the electrolytic solution.

## Description

### BACKGROUND OF THE INVENTION

### 1. Field of the Invention

The present invention relates to an electrolytic solution for a non-aqueous electrolytic solution secondary battery, a non-aqueous electrolytic solution secondary battery, and a manufacturing method of a non-aqueous electrolytic solution secondary battery.

### 2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been enlarged and been used in transportation equipment such as automobiles, and the use of the battery as a storage device for nighttime power, power generation by natural energy, and the like has also been promoted.

A general manufacturing method of the non-aqueous electrolytic solution secondary battery will be described. First, a positive electrode and a negative electrode are disposed to face each other with a separator interposed therebetween to obtain an electrode laminate, the positive electrode consisting of a laminated structure of a positive electrode collector and a positive electrode active material layer and the negative electrode consisting of a laminated structure of a negative electrode collector and a negative electrode active material layer. Usually, the electrode laminate is further wound to obtain a wound electrode body, and the wound electrode body is stored in a battery case or the like. Next, an electrolytic solution is poured into the battery case, and the entire positive electrode active material layer, the separator, and the negative electrode active material layer are permeated with the electrolytic solution. Thereafter, the obtained battery is charged and discharged (initialized) to form a solid electrolyte interface (SEI) on the negative electrode, thereby obtaining the non-aqueous electrolytic solution secondary battery. In a case where the electrolytic solution is injected and then quickly permeated into the positive electrode active material layer, the separator, and the negative electrode active material layer, the time from the injection to the initialization treatment of the battery can be shortened, which leads to improvement in manufacturing efficiency.

A technique of increasing permeability of the electrolytic solution into the positive electrode active material layer, the separator, and the negative electrode active material layer has been proposed. For the purpose of improving the permeability of the electrolytic solution into the separator, for example, WO2011/055596A discloses that a porous film in which a liquid absorption height of an electrolytic solution in at least one direction of a longitudinal direction or a width direction of the film 30 minutes after the start of the liquid absorption of the electrolytic solution is 10 to 60 mm and a breaking strength in the longitudinal direction is 65 MPa is used as the separator. WO2011/055595A discloses that the porous film has excellent liquid absorption properties for the electrolytic solution, and in a case of being used as the separator, excellent winding workability during battery manufacturing and excellent battery characteristics (output characteristics, capacity characteristics, and cycle characteristics) can be achieved.

In addition, for the purpose of improving the permeability of the electrolytic solution into the positive electrode active material layer or the negative electrode active material layer, for example, JP2009-211952A proposes that wettability of the electrode body with respect to the electrolytic solution is improved by imparting hydrophilicity to a surface of the electrode body.

### SUMMARY OF THE INVENTION

In recent years, with multifunctionalization of electronic apparatuses, communication devices, and the like, non-aqueous electrolyte secondary batteries are required to have a further increase in energy density (increase in capacity). As a unit for satisfying this requirement, for example, it is conceivable to increase a volume share of the positive electrode active material layer and the negative electrode active material layer (the positive electrode active material layer and the negative electrode active material layer are collectively referred to as an electrode active material layer; in addition, a positive electrode and a negative electrode are collectively referred to as an electrode) in the entire battery element member, or to compress the electrode active material layer by pressing or the like, to fill solid particles such as an electrode active material and a conductive auxiliary agent in the electrode active material layer at a high density. However, in a case where a filling density of the solid particles in the electrode active material layer is physically increased to a high level as in the latter case, the electrolytic solution is less likely to be permeated into the electrode active material layer in the battery manufacturing. That is, it is necessary to secure a long time from the addition of the electrolytic solution to the initialization treatment of the battery, which is a problem in terms of the battery manufacturing efficiency.

An object of the present invention is to provide an electrolytic solution for a non-aqueous electrolytic solution secondary battery, which has excellent permeability to an electrode active material layer, and a non-aqueous electrolytic solution secondary battery and a manufacturing method thereof, using the electrolytic solution.

As a result of intensive studies in view of the above-described problems, the present inventors have found that, in an electrolytic solution obtained by dissolving a polymer having a specific molecular weight, which exhibits a predetermined high adsorption rate to a carbonaceous material used as a negative electrode active material, a conductive auxiliary agent, or the like, in a solution which is obtained by dissolving a lithium salt in a non-aqueous solvent, wettability of the electrolytic solution to an electrode active material layer containing the carbonaceous material is effectively increased, and even in an electrode active material layer in which a filling density of solid particles is increased, permeability of the electrolytic solution between particles is sufficiently increased. The present invention has been completed by further repeating studies on the basis of the above-described finding.

The above-described objects of the present invention have been achieved by the following means.
[1] An electrolytic solution for a non-aqueous electrolytic solution secondary battery, obtained by dissolving a lithium salt and a polymer (I) in a non-aqueous solvent,
   in which the polymer (I) has an adsorption rate of 15% or more to acetylene black and a weight-average molecular weight of 1,000 to 150,000, and
   a content of the polymer (I) in the electrolytic solution is 0.1% to 5.0% by mass.
[2] The electrolytic solution for a non-aqueous electrolytic solution secondary battery according to [1],
   in which the polymer (I) satisfies at least one of the following (a) to (d),
   (a) aromatic ring content: 40% by mass or more,
   (b) acid value: 30 mgKOH/g or more,
   (c) amine value: 30 mgKOH/g or more,
   (d) hydroxyl number: 30 mgKOH/g or more.
[3] The electrolytic solution for a non-aqueous electrolytic solution secondary battery according to [1] or [2],
   in which the polymer (I) includes at least one of an amino group, a carboxy group, a phosphate group, a phosphonic acid group, a sulfo group, a hydroxy group, a carbamoyl group, or an aromatic group.
[4] A non-aqueous electrolytic solution secondary battery comprising, in the following order:
   a positive electrode;
   a separator; and
   a negative electrode,
   in which the electrolytic solution for a non-aqueous electrolytic solution secondary battery according to any one of [1] to [3] is used as an electrolytic solution.
[5] The non-aqueous electrolytic solution secondary battery according to [4],
   in which at least one of a positive electrode active material layer or a negative electrode active material layer contains a carbonaceous material.
[6] A manufacturing method of a non-aqueous electrolytic solution secondary battery, comprising:
   permeating at least a positive electrode active material layer, a separator, and a negative electrode active material layer of an electrode laminate having a positive electrode, a separator, and a negative electrode in this order, with the electrolytic solution for a non-aqueous electrolytic solution secondary battery according to any one of [1] to [3].
[7] The manufacturing method of a non-aqueous electrolytic solution secondary battery according to [6],
   in which at least one of the positive electrode active material layer or the negative electrode active material layer contains a carbonaceous material.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

The electrolytic solution for a non-aqueous electrolytic solution secondary battery according to the aspect of the present invention has excellent permeability to an electrode active material layer. In the non-aqueous electrolytic solution secondary battery according to the aspect of the present invention, in a liquid injection step of the electrolytic solution in manufacturing thereof, the electrolytic solution can be quickly permeated into the electrode active material layer, and thus the manufacturing efficiency is excellent. With the manufacturing method of a non-aqueous electrolytic solution secondary battery according to the aspect of the present invention, in the liquid injection step of the electrolytic solution, the electrolytic solution can be quickly permeated into the electrode active material layer, and as a result, the battery manufacturing efficiency can be improved.

### BRIEF DESCRIPTION OF THE DRAWINGS

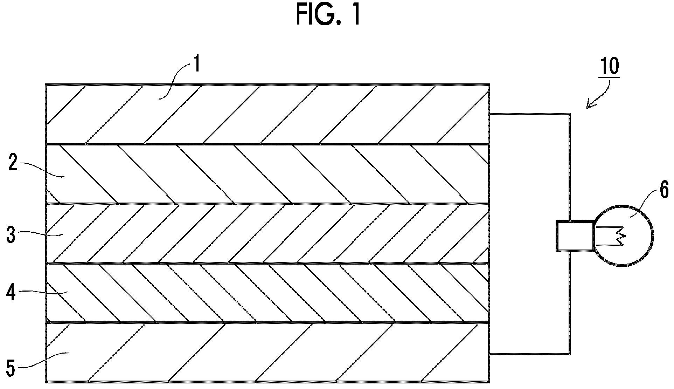

Fig. 1 is a longitudinal cross-sectional view schematically showing a basic lamination configuration of an embodiment of the secondary battery according to the present invention.

### DESCRIPTION OF THE PREFERRED EMBODIMENTS

Preferred embodiments of the present invention will be described, but the present invention is not limited to these embodiments except as specified in the present invention.

### [Electrolytic solution for non-aqueous electrolytic solution secondary battery]

The electrolytic solution for a non-aqueous electrolytic solution secondary battery according to the embodiment of the present invention (also referred to as "electrolytic solution according to the embodiment of the present invention") is an electrolytic solution obtained by dissolving a lithium salt and a specific polymer in a non-aqueous solvent. The electrolytic solution according to the embodiment of the present invention may contain a metal salt other than the lithium salt (for example, a potassium salt, a sodium salt, a calcium salt, a magnesium salt, or the like), in addition to the lithium salt. The metal salt contained in the electrolytic solution according to the embodiment of the present invention is typically a lithium salt, and in this case, the electrolytic solution according to the embodiment of the present invention is used as a so-called electrolytic solution for a lithium ion secondary battery. The electrolytic solution according to the embodiment of the present invention may dissolve various additives as necessary. In the present invention, the term "electrolytic solution for a non-aqueous electrolytic solution secondary battery" or simply "electrolytic solution" means a solution containing a non-aqueous solvent and all components dissolved in the non-aqueous medium.

Each component constituting the electrolytic solution according to the embodiment of the present invention will be described.

### <Non-aqueous solvent>

A medium constituting the electrolytic solution according to the embodiment of the present invention is a non-aqueous solvent.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidinone, N-methyloxazolidinone, N,N'-dimethylimidazolidinone, nitromethane, nitroethane, sulfolane, trimethyl phosphate, dimethylsulfoxide, and dimethylsulfoxide phosphoric acid. These may be used alone or in combination of two or more. Among these, at least one of ethylene carbonate, propylene carbonate, dimethyl carbonate, diethyl carbonate, ethyl methyl carbonate, or γ-butyrolactone is preferable; and a combination of a high-viscosity (high-dielectric constant) solvent (for example, relative permittivity ε ≥ 30) such as ethylene carbonate and propylene carbonate and a low-viscosity solvent (for example, viscosity ≤ 1 mPa·s) such as dimethyl carbonate, ethyl methyl carbonate, and diethyl carbonate is more preferable. By using a mixed solvent having such a combination, dissociation properties of electrolyte salts and mobility of ions are improved. As the above-described non-aqueous solvent, a combination of ethylene carbonate, dimethyl carbonate, and ethyl methyl carbonate is particularly preferable.

The non-aqueous solvent used in the present invention is not limited to these solvents.

A content of the non-aqueous solvent in the electrolytic solution according to the embodiment of the present invention may be such that the total content of the lithium salt, the polymer (I), and the non-aqueous solvent is 100% by mass.

The content of the non-aqueous solvent in the electrolytic solution according to the embodiment of the present invention is preferably 49.9% to 89.9% by mass, more preferably 60.0% to 89.9% by mass, still more preferably 70.0% to 88.0% by mass, and even more preferably 70.0% to 85.0% by mass.

### <Lithium salt>

As the lithium salt, a lithium salt which is usually used for an electrolyte of a lithium ion secondary battery is preferable, and examples thereof include the following lithium salts.

(L-1) Inorganic lithium salt: inorganic fluoride salt such as LiPF₆, LiBF₄, LiAsF₆, and LiSbF₆; perhalogenate such as LiClO₄, LiBrO₄, and LiIO₄; an inorganic chloride salt such as LiAlCl₄; and the like

(L-2) Fluorine-containing organic lithium salt: perfluoroalkane sulfonate such as LiCF₃SO₃; perfluoroalkanesulfonylimide salt such as LiN(CF₃SO₂)₂, LiN(CF₃CF₂SO₂)₂, LiN(FSO₂)₂, and LiN(CF₃SO₂)(C₄F₉SO₂); perfluoroalkane sulfonylmethide salt such as LiC(CF₃SO₂)₃; fluoroalkyl fluorophosphate such as Li[PF₅(CF₂CF₂CF₃)], Li[PF₄(CF₂CF₂CF₃)₂], Li[PF₃(CF₂CF₂CF₃)₃], Li[PF5(CF₂CF₂CF₂CF₃)], Li[PF₄(CF₂CF₂CF₂CF₃)₂], and Li[PF₃(CF₂CF₂CF₂CF₃)₃]; and the like

(L-3) Oxalatoborate salt: lithium bis(oxalato)borate, lithium difluorooxalatoborate, and the like

Among these, LiPF₆, LiBF₄, LiAsF₆, LiSbF₆, LiClO₄, Li(R^{f1}SO₃), LiN(R^{f1}SO₂)₂, LiN(FSO₂)₂, or LiN(R^{f1}SO₂)(R^{f2}SO₂) is preferable; LiPF₆, LiBF₄, LiN(R^{f1}SO₂)₂, LiN(FSO₂)₂, or LiN(R^{f1}SO₂)(R^{f2}SO₂) is more preferable; and LiPF₆ is particularly preferable. Here, R^{f1} and R^{f2} each represent a perfluoroalkyl group, and the number of carbon atoms in the perfluoroalkyl group is preferably 1 to 6.

As the lithium salt used in the electrolytic solution according to the embodiment of the present invention, one kind of electrolyte may be used alone, or two or more kinds of electrolytes may be arbitrarily combined.

A concentration of the lithium salt in the electrolytic solution according to the embodiment of the present invention is usually 10.0% to 50.0% by mass, preferably 15.0% to 30.0% by mass. In the electrolytic solution according to the embodiment of the present invention, the concentration of the lithium salt can be 11.0% to 30.0% by mass or 12.0% to 20.0% by mass. The concentration is preferably 0.5 to 1.5 M.

### <Polymer (I)>

The electrolytic solution according to the embodiment of the present invention contains the polymer (I). The polymer (I) is not particularly limited as long as it is a polymer having a weight-average molecular weight of 1,000 to 150,000, an adsorption rate of 15% or more to acetylene black, and being soluble in the above-described non-aqueous solvent.

The weight-average molecular weight of the polymer (I) is 1,000 to 150,000, preferably 1,000 to 120,000, more preferably 1,000 to 100,000, still more preferably 1,000 to 70,000, and particularly preferably 1,000 to 50,000.

### (Measuring method of weight-average molecular weight)

In the present invention, the weight-average molecular weight of the polymer is measured by gel permeation chromatography (GPC). The weight-average molecular weight is a weight-average molecular weight in terms of polyethylene oxide. As a method of measuring the weight-average molecular weight, a value measured by the following method is adopted in principle. In this case, an appropriate eluent may be selected and used depending on the type of the polymer.
Measuring instrument: HLC-8320GPC (product name, manufactured by Tosoh Corporation)
Column: TOSOH TSKgel guard column Super HZ-L, Super HZM-H, Super HZ4000, Super HZ2000 (trade name, all manufactured by Tosoh Corporation)
Carrier: tetrahydrofuran (THF) solution
Measurement temperature: 40°C
Carrier flow rate: 0.35 ml/min
Sample Concentration: 0.2% by mass
Detector: refractive index (RI) detector

The adsorption rate of the polymer (I) to acetylene black is 15% or more. The adsorption rate is preferably 16% or more, more preferably 18% or more, still more preferably 20% or more, even more preferably 22% or more, and particularly preferably 24% or more. In addition, the adsorption rate is usually 90% or less, and it is practical to set the adsorption rate to 80% or less. Therefore, the adsorption rate of the polymer (I) to acetylene black is preferably 15% to 90%, more preferably 16% to 80%, still more preferably 18% to 80%, even more preferably 20% to 80%, even still more preferably 22% to 80%, and further more preferably 24% to 80%. The adsorption rate of the polymer (I) to acetylene black can be measured by the following method.

### (Method for determining adsorption rate to acetylene black)

A mixed solvent in which ethylene carbonate (EC), dimethyl carbonate (DMC), and ethyl methyl carbonate (EMC) are mixed at a mass ratio of EC:DMC:EMC = 3:4:3 is mixed with LiPF₆ as the lithium salt to a concentration of 1 M and mixed with the polymer (I) to a concentration of 3% by mass, thereby preparing an electrolytic solution (i). The electrolytic solution (i) and acetylene black (average primary particle diameter (volume-based median diameter D50): 35 nm, specific surface area: 68 m²/g, powder form) are mixed with each other at 25°C so that a mass ratio of acetylene black and the electrolytic solution is 5:95, thereby obtaining 10 g of a mixture. After standing the mixture for 1 hour, the electrolytic solution (referred to as an electrolytic solution (ii)) is taken out. The amount of the polymer (I) remaining in the electrolytic solution (ii) is determined by H-NMR measurement. The adsorption rate of the polymer (I) to acetylene black is calculated according to the following expression. In the calculation of the adsorption rate, assuming that the amount of the electrolytic solution is the same at 9.5 g before and after the mixing of the acetylene black and the electrolytic solution, the amount of the polymer (I) in 9.5 g of the electrolytic solution before and after the mixing is calculated and substituted into the following expression. Therefore, in the following expression, the amount of the electrolytic solution (i) and the amount of the electrolytic solution (ii) are the same. Adsorption rate (%) of polymer (I) = 100 - {[Amount (g) of polymer (I) in electrolytic solution (ii)]/[Amount (g) of polymer (I) in electrolytic solution (i)]} × 100

As the above-described acetylene black, for example, DENKA BLACK (trade name) manufactured by Denka Co., Ltd. can be used.

In addition, the "powder" in the acetylene black used in the "method for determining adsorption rate to acetylene black" test described above represents a shape of powder (including primary particles and/or aggregates (secondary particles) in which primary particles are aggregated); and for example, a pressed powder and granules are not included.

In a case where a commercially available acetylene black is used, the average particle diameter of the acetylene black is adopted as the value described in the catalog of the manufacturer.

In a case where the information on the average particle diameter of the manufacturer cannot be obtained or in a case where synthesized acetylene black is used, the average particle diameter value (volume-based median diameter D50 in water) obtained by dispersing the acetylene black in water and measuring the average particle diameter with a laser diffraction/scattering-type particle size distribution analyzer (for example, Particle LA-960V2 manufactured by HORIBA, Ltd.) is adopted.

In the non-aqueous electrolytic solution secondary battery, a carbonaceous material (single carbon material) such as the acetylene black is often used as a negative electrode active material of a negative electrode active material layer, and is also used as a conductive auxiliary agent of the negative electrode active material layer. In addition, it is also common that the carbonaceous material is used as a conductive auxiliary agent in a positive electrode active material layer. For example, carbonaceous materials such as carbon black, graphite, activated carbon, carbon fiber, carbon nanotube, coke, soft carbon, and hard carbon are used as the negative electrode active material, and also used as the conductive auxiliary agent.

The fact that the polymer (I) exhibits a high adsorption rate of 15% or more to acetylene black means that the polymer (I) has a high affinity for the negative electrode active material or the conductive auxiliary agent. Therefore, the electrolytic solution obtained by dissolving the polymer (I) can be modified to have high physical properties of permeating into the electrode active material layer.

On the other hand, even in a case where an electrolytic solution obtained by dissolving a polymer having an adsorption rate of 15% or more to acetylene black is used, as the molecular weight of the polymer is too large, the permeability to the electrode active material layer cannot be increased. It is considered that this is partly because the addition of the high-molecular-weight polymer increases a viscosity of the electrolytic solution. Therefore, in the present invention, the upper limit of the molecular weight of the polymer (I) is limited to 150,000.

The above-described polymer (I) preferably satisfies at least one of the following (a) to (d).
(a) Aromatic ring content: 40% by mass or more
(b) Acid value: 30 mgKOH/g or more
(c) Amine value: 30 mgKOH/g or more
(d) Hydroxyl number: 30 mgKOH/g or more

The fact that at least one of the above (a) to (d) is satisfied means that the polymer (I) has a predetermined level of high content of a group having an affinity for the carbonaceous material.

The aromatic ring content in the above (a) is preferably 40% by mass or more, more preferably 45% by mass or more, and still more preferably 50% by mass or more. The upper limit thereof is not particularly limited, but is practically 70% by mass or less. Therefore, the aromatic ring content in the above (a) is preferably 40% to 70% by mass, more preferably 45% to 70% by mass, and still more preferably 50% to 70% by mass.

The aromatic ring content is calculated by the following expression. Aromatic ring content = [Total mass of aromatic rings constituting polymer (I)/Total mass of polymer (I)] × 100

In a case where the aromatic ring has a substituent, the mass of each aromatic ring in the above expression means the mass of the aromatic ring as the substituent is replaced with a hydrogen atom. That is, the mass of each aromatic ring is the mass of a structure consisting of ring-constituting atoms of the aromatic ring and a hydrogen atom bonded to the ring-constituting atoms.

The acid value in the above (b) is more preferably 30 mgKOH/g or more, and still more preferably 45 mgKOH/g or more. The upper limit thereof is not particularly limited, but is practically 60 mgKOH/g or less. Therefore, the acid value in the above (b) is preferably 30 to 60 mgKOH/g and more preferably 45 to 60 mgKOH/g.

The amine value in the above (c) is more preferably 30 mgKOH/g or more, and still more preferably 45 mgKOH/g or more. The upper limit thereof is not particularly limited, but is practically 60 mgKOH/g or less. Therefore, the amine value in the above (c) is preferably 30 to 60 mgKOH/g and more preferably 45 to 60 mgKOH/g.

The hydroxyl number in the above (d) is more preferably 30 mgKOH/g or more, and still more preferably 45 mgKOH/g or more. The upper limit thereof is not particularly limited, but is practically 60 mgKOH/g or less. Therefore, the hydroxyl number in the above (d) is preferably 30 to 60 mgKOH/g and more preferably 45 to 60 mgKOH/g.

The acid value in the above (b) can be determined according to the neutralization titration method of JIS K 0070: 1992.

The amine value in the above (c) can be determined in accordance with ASTM D2074-07 (total amine value).

The hydroxyl number in the above (d) can be determined according to the neutralization titration method of JIS K 0070: 1992.

The above-described polymer (I) preferably includes at least one group (hereinafter, also referred to as an adsorptive group) of an amino group, a carboxy group, a phosphate group, a phosphonic acid group, a sulfo group, a hydroxy group, a carbamoyl group, or an aromatic group. Such a group exhibits adsorptivity to the carbonaceous material, and contributes to improving the affinity with the negative electrode active material, the conductive auxiliary agent, and the like. The values in the above (a) to (d) can be adjusted by controlling the content of each of the above-described groups (the amount of the group introduced into the polymer).

The above-described amino group may be an unsubstituted amino group, a monosubstituted amino group, or a disubstituted amino group. In a case where the amino group is a substituted amino group, a substituent included in the amino group is preferably an alkyl group (preferably an alkyl group having 1 to 10 carbon atoms, more preferably an alkyl group having 1 to 6 carbon atoms, still more preferably an alkyl group having 1 to 4 carbon atoms, and even more preferably methyl or ethyl).

The above-described carboxy group, phosphate group (-OP(=O)(-OH)OH), phosphonic acid group (-P(=O)(-OH)OH), and sulfo group may have a structure of a salt. In addition, the structure may be a structure of an acid anhydride. That is, in the present invention, the term "carboxy group" simply means a carboxy group (-COOH), a salt of the carboxy group, and a group in which the carboxy group is dehydrated and condensed. The same applies to the phosphate group, the phosphonic acid group, and the sulfo group.

An amino group included in the above-described carbamoyl group (aminocarbonyl group) may be an unsubstituted amino group, a monosubstituted amino group, or a disubstituted amino group. In a case where the amino group included in the carbamoyl group is a substituted amino group, a substituent included in the amino group is preferably an alkyl group (preferably an alkyl group having 1 to 10 carbon atoms, more preferably an alkyl group having 1 to 6 carbon atoms, still more preferably an alkyl group having 1 to 4 carbon atoms, and even more preferably methyl or ethyl).

The above-described aromatic group means a monovalent group obtained by removing one hydrogen atom from an aromatic ring. The aromatic group may be an aromatic hydrocarbon group or an aromatic heterocyclic group, and an aromatic hydrocarbon group is more preferable. The number of carbon atoms in the aromatic group is preferably 5 to 20. The above-described aromatic group may have a substituent. Therefore, the above-described aromatic hydrocarbon group and the above-described aromatic heterocyclic group may also have a substituent. The aromatic ring constituting the aromatic group may be a monocycle or a fused ring, and a monocycle is preferable. The above-described aromatic group is particularly preferably a phenyl group.

The polymer (I) may be a homopolymer or a copolymer as long as it satisfies the definition of the present invention, and is usually a copolymer. A polymerization form of the copolymer may be any of random and block.

The polymer (I) may be a polymer by addition polymerization or a polymer by condensation polymerization, and a polymer by addition polymerization (polymer in which a main chain is composed of a carbon-carbon bond) is preferable. By introducing the above-described adsorptive group into these polymers, a target polymer (I) can be obtained. Examples of a monomer for introducing the above-described adsorptive group include (meth)acrylic acid; maleic acid anhydride; (meth)acrylamide; styrene; and a vinyl compound or an acrylic compound having an amino group, a phosphate group, a phosphonic acid group, a sulfo group, a hydroxy group, or a carbamoyl group. In addition, it is also preferable that the polymer (I) has a constitutional component derived from an alkyl (meth)acrylate, an aryl (meth)acrylate, or the like, as a constitutional component.

The polymer (I) used in the present invention can be obtained by a conventional polymer synthesis method according to the polymerization form, except that the adsorption rate to acetylene black is controlled to be 15% or more.

The content of the polymer (I) in the electrolytic solution according to the embodiment of the present invention is 0.1% to 5.0% by mass. In a case where the content of the polymer (I) in the electrolytic solution according to the embodiment of the present invention is less than 0.1% by mass, a sufficient improvement in permeability to the electrode active material layer cannot be obtained. In addition, in a case where the content of the polymer (I) in the electrolytic solution according to the embodiment of the present invention is more than 5.0% by mass, the action of improving the permeability to the electrode active material layer is also reduced. The content of the polymer (I) in the electrolytic solution according to the embodiment of the present invention is preferably 0.3% to 5.0% by mass, more preferably 0.4% to 4.0% by mass, and still more preferably 0.5% to 3.0% by mass.

The electrolytic solution according to the embodiment of the present invention can be obtained by mixing the non-aqueous solvent, the lithium salt, and the polymer (I) and dissolving the lithium salt and the polymer (I) in the non-aqueous solvent.

### [Non-aqueous electrolytic solution secondary battery and manufacturing method of non-aqueous electrolytic solution secondary battery]

The non-aqueous electrolytic solution secondary battery according to the embodiment of the present invention (hereinafter, also referred to as "secondary battery according to the embodiment of the present invention") includes a positive electrode, a separator, and a negative electrode in this order, and contains the electrolytic solution according to the embodiment of the present invention as an electrolytic solution.

The positive electrode has a positive electrode collector and a positive electrode active material layer in contact with the positive electrode collector; and the negative electrode has a negative electrode collector and a negative electrode active material layer in contact with the negative electrode collector. The secondary battery according to the embodiment of the present invention can be obtained by permeating the positive electrode active material layer, the separator, and the negative electrode active material layer with the electrolytic solution according to the embodiment of the present invention, and then performing an initialization treatment. The secondary battery according to the embodiment of the present invention is obtained by a conventional method, except that the electrolytic solution according to the embodiment of the present invention is used as an electrolytic solution.

Fig. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in the case of lithium ion secondary battery, during charge, while electrons (e⁻) are supplied to the negative electrode side through an external circuit, lithium ions (Li⁺) move from the positive electrode through the electrolytic solution and are accumulated in the negative electrode. On the other hand, during discharge, while the lithium ions (Li⁺) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

In the secondary battery according to the embodiment of the present invention, each member such as the positive electrode collector, the positive electrode active material layer, the negative electrode collector, the negative electrode active material layer, and the separator is not particularly limited, except that the electrolytic solution according to the embodiment of the present invention is used as an electrolytic solution. As these materials, members, and the like, those used for a typical secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

That is, the manufacturing method of a secondary battery according to the embodiment of the present invention includes permeating, with the electrolytic solution according to the embodiment of the present invention, at least the positive electrode active material layer, the separator, and the negative electrode active material layer of the electrode laminate having the positive electrode, the separator, and the negative electrode in this order. In the present invention, the term "electrode laminate" simply includes a case in which the electrode laminate is wound to form a wound electrode body.

It is preferable that the secondary battery according to the embodiment of the present invention contains a carbonaceous material as an electrode active material and/or a conductive auxiliary agent, in at least one of the positive electrode active material layer or the negative electrode active material layer. Generally, the carbonaceous material is used as a conductive auxiliary agent in the positive electrode active material layer, and the carbonaceous material is used as a negative electrode active material and/or a conductive auxiliary agent in the negative electrode active material layer.

A thickness of the positive electrode active material layer in the secondary battery according to the embodiment of the present invention is not particularly limited, and can be set to, for example, 5 to 500 µm, preferably 20 to 200 µm.

A thickness of the negative electrode active material layer in the secondary battery according to the embodiment of the present invention is not particularly limited, and can be set to, for example, 5 to 500 µm, preferably 20 to 200 µm.

In the secondary battery according to the embodiment of the present invention, a filling density of solid particles (the electrode active material, the conductive auxiliary agent, and the like) of the electrode active material layer is not particularly limited. In the secondary battery according to the embodiment of the present invention, the permeability of the electrolytic solution into the electrode active material layer can be further increased in the manufacturing of the secondary battery, regardless of the filling density of the solid particles in the electrode active material layer. In the secondary battery according to the embodiment of the present invention, even in a case where the electrode active material layer is highly compressed by pressing or the like and the electrode active material particles are filled at a high density in the electrode active material layer, the electrolytic solution can be quickly permeated into the electrode active material layer in the manufacturing, and thus the manufacturing efficiency can be further improved. A void ratio of the electrode active material layer can be, for example, 15% to 50%, and from the viewpoint of further enhancing the effect of the present invention, the void ratio of at least any one of the negative electrode active material layer or the positive electrode active material layer is preferably 20% to 45% and more preferably 25% to 40%. The void ratio can be calculated as follows from a thickness (cm) of the active material layer, a weight (g/cm²) of the active material layer per unit area, and a density (g/cm³) of the active material. (Void ratio) = 100 - (Weight of active material layer per unit area) × 100/{(Thickness of active material layer) × (Density of active material)}

The non-aqueous electrolytic solution secondary battery according to the embodiment of the present invention can be mounted on electronic apparatuses such as a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted to be limited thereto.

### Examples

### [Preparation of polymer (I)]

### <Preparation of polymer 1a>

A polymer 1a consisting of constitutional components shown in Table 1 below was prepared as follows.
10 g of styrene, 6 g of maleic acid anhydride, 4 g of methyl methacrylate, 1.5 g of azobis(isobutyronitrile), and 40 g of methyl ethyl ketone were mixed at room temperature to prepare a solution A.
100 g of methyl ethyl ketone was added to a three-neck flask equipped with a stirrer, a thermometer, a reflux condenser, a thermostat, and a dropping pump while performing nitrogen purge, and the temperature was raised to 85°C with stirring. The solution A prepared above was added dropwise to the three-neck flask at a constant rate for 1 hour, using a dropwise addition pump. After completion of the dropwise addition, the mixture was stirred at the same temperature, and the reaction was completed after 5 hours. After completion of the reaction, the solution was concentrated to obtain the polymer 1a.

### <Preparation of polymers 1b to 1f>

Polymers 1b to 1f were prepared in the same manner as in the preparation of the polymer 1a described above, except that, in the preparation of the polymer 1a, the addition amount of azobis(isobutyronitrile) was changed such that the obtained polymer had a weight-average molecular weight shown in Table 3.

### <Preparation of polymers 2 and 3>

Polymers 2 and 3 were prepared in the same manner as in the preparation of the polymer 1a described above, except that the type and blending amount (parts by mass) of the monomer in the preparation of the polymer 1a were as shown in Table 1.

**[Table 1]**

| Table 1: <Formulation of polymer> | | | | | |
|---|---|---|---|---|---|
| Type of polymer | Monomer | | | | |
| | St | MA | DM | HEMA | MMA |
| 1a to 1f | 50 | 30 | | | 20 |
| 2 | 50 | | 30 | | 20 |
| 3 | 50 | | | 30 | 20 |

The abbreviations in Table 1 are as follows.
St: styrene
MA: maleic acid anhydride
DM: dimethylaminoethyl methacrylate
HEMA: 2-hydroxyethyl methacrylate
MMA: methyl methacrylate

A blank indicates that the component was not contained. The numerical value of the blending amount of each component is parts by mass.

### <Preparation of polymer 4>

A ring-opening polymerization of propiolactone was carried out according to the method described in JP2018-52955A to prepare a polymer 4 (polypropiolactone).

### <Preparation of polymer 5>

A commercially available polyvinyl chloride (manufactured by Sigma-Aldrich Co. LLC) was used as a polymer 5.

Repeating structures of the polymers 4 and 5 are shown in Table 2. n is the repetition number.

**[Table 2]**

| Type of polymer | Structure |
|---|---|
| 4 | 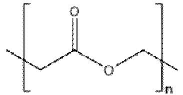 |
| 5 | 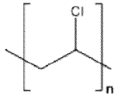 |

A weight-average molecular weight (Mw) of each of the above-described polymers was measured as described above. The results are shown in Table 3.

### [Adsorption rate to acetylene black]

An adsorption rate of each of the polymers prepared above to acetylene black was determined by the method described above. The results are shown in Table 3.

**[Table 3]**

| Type of polymer | Mw | Adsorption rate to acetylene black (%) |
|---|---|---|
| 1a | 10000 | 25 |
| 1b | 1000 | 25 |
| 1c | 50000 | 25 |
| 1d | 100000 | 25 |
| 1e | 150000 | 25 |
| 1f | 200000 | 25 |
| 2 | 10000 | 20 |
| 3 | 10000 | 15 |
| 4 | 10000 | 5 |
| 5 | 10000 | 5 |

In all of the polymers 1a to 1f, 2, and 3, the aromatic ring content was 40% by mass or more. Furthermore, the polymers 1a to 1f had an acid value of 30 mgKOH/g or more. The polymer 2 had an amine value of 30 mgKOH/g or more. The polymer 3 had a hydroxyl number of 30 mgKOH/g or more. The aromatic ring content, the acid value, the amine value, and the hydroxyl number were measured by the above-described methods.

### [Preparation of non-aqueous electrolytic solution]

A mixed solvent in which ethylene carbonate (EC), dimethyl carbonate (DMC), and ethyl methyl carbonate (EMC) were mixed at a mass ratio of EC:DMC:EMC = 3:4:3 was prepared, LiPF₆ as a lithium salt was blended to 1 M in the mixed solvent, and each of the polymers shown in Table 4 was further added thereto such that the polymer concentration in the electrolytic solution was the concentration shown in the column of "Polymer content" in Table 4, thereby preparing each of electrolytic solutions of Examples 1 to 11 and Comparative Examples 1, 2, 4, and 5.

In these electrolytic solutions, each polymer was dissolved.

An electrolytic solution of Comparative Example 3 was prepared in the same manner as in the preparation of the electrolytic solution of Example 1, except that the polymer was not blended in the preparation of the electrolytic solution of Example 1.

Permeability to the electrode active material layer was evaluated as follows for each of the electrolytic solutions obtained above. In addition, an initial discharge capacity of the secondary battery obtained using each electrolytic solution was evaluated as follows. The obtained results are shown in Table 4.

### [Production of non-aqueous secondary battery]

A non-aqueous secondary battery was produced as follows using each of the electrolytic solutions obtained above.

### <Electrode production>

### (Positive electrode)

LiFePO₄ (LFP) as a positive electrode active material, acetylene black (AB) (product name: DENKA BLACK, manufactured by Denka Co., Ltd., average primary particle diameter: 35 nm, specific surface area: 68 m²/g) as a conductive auxiliary agent of a carbonaceous material, polyvinylidene fluoride (PVdF) as a binder, and N-methylpyrrolidone (NMP) as a solvent were mixed and stirred at 1,000 rpm for 120 seconds using a centrifugal planetary mixer (manufactured by Thinky Corporation: Awatori Nentaro) to obtain a slurry for a positive electrode. The content of each component in the slurry for a positive electrode was set to LFP: 47% by mass, AB: 2% by mass, PVdF: 2% by mass, and NMP: 49% by mass.

The above-described slurry for a positive electrode was applied to one surface of a positive electrode collector (aluminum foil) having a thickness of 12 µm with a thickness of 100 µm, and was further pressed and dried in a vacuum at 120°C for 6 hours to obtain a sheet-shaped positive electrode consisting of a positive electrode collector and a positive electrode active material layer. The positive electrode active material layer of the positive electrode had a thickness of approximately 80 µm and a void ratio of approximately 35%.

### (Negative electrode)

Artificial graphite as a negative electrode active material of a carbonaceous material, a styrene-butadiene copolymer (SBR) as a binder, carboxymethyl cellulose (CMC) as a thickener, and NMP as a solvent were mixed and stirred at 1,000 rpm for 120 seconds using a centrifugal planetary mixer (manufactured by Thinky Corporation: Awatori Nentaro) to obtain a slurry for a negative electrode. The content of each component in the slurry for a negative electrode was set to artificial graphite: 57% by mass, SBR: 2% by mass, CMC: 1% by mass, and NMP: 40% by mass.

The above-described slurry for a negative electrode was applied to one surface of a negative electrode collector (copper foil) having a thickness of 12 µm with a thickness of 100 µm, and was further pressed and dried in a vacuum at 120°C for 6 hours to obtain a sheet-shaped negative electrode consisting of a negative electrode collector and a negative electrode active material layer. The negative electrode active material layer of the negative electrode had a thickness of approximately 80 µm and a void ratio of approximately 35%.

### <Production of non-aqueous secondary battery>

The obtained positive electrode and negative electrode were laminated with a polypropylene separator (thickness: 25 µm) to obtain an electrode laminate consisting of positive electrode collector-positive electrode active material layer-separator-negative electrode active material layer-negative electrode collector. By ultrasonic welding, an aluminum tab was attached to an end part of the positive electrode collector, and a nickel tab was attached to an end part of the negative electrode collector. The electrode laminate was accommodated in a laminating container, and 0.40 m1 of the electrolytic solution prepared as described above was injected from a liquid injection port of the laminating container. Thereafter, the liquid injection port was sealed to seal the laminating container, thereby obtaining a non-aqueous electrolytic solution secondary battery for a test.

### [Evaluation of initial battery characteristics 15 minutes after battery production]

15 minutes after the completion of the battery production described above, the battery was charged to 3.6 V and then discharged to 2.0 V according to the following initialization conditions, and a discharge capacity in a case of carrying out the initialization was evaluated. The discharge capacity at the initial time was used as an initial discharge capacity, and the evaluation was carried out by applying the initial discharge capacity to the following evaluation standard.

### Initialization conditions:

Charging: constant current (CC) and constant voltage (CV) charging; CC current: 3 mA, cutoff voltage: 3.6 V, CV cutoff current: 0.5 mA
Discharging: constant current (CC) discharging; CC current: 3 mA, cutoff voltage: 2.0 V
Temperature: room temperature (25°C)

### -Evaluation standard for initial discharge capacity-

A: 150 mAh/g or more
B: 120 mAh/g or more and less than 150 mAh/g
C: 100 mAh/g or more and less than 120 mAh/g
D: less than 100 mAh/g

### [Evaluation of permeability of electrolytic solution into electrode active material layer]

Permeability of each of the electrolytic solutions obtained above into the electrode active material layer was evaluated as follows.

100 µL of the electrolytic solution was added dropwise to a surface of the positive electrode active material layer of the positive electrode and a surface of the negative electrode active material layer of the negative electrode produced as described above, and the time until the liquid droplet of the electrolytic solution permeated into the active material layer was evaluated. A state of the permeation of the liquid droplet was observed using a contact angle meter. The time taken for the liquid droplet to disappear after the liquid droplet has adhered to the surface liquid droplet (a contact angle was 0°) was measured and evaluated according to the following evaluation standard.

### -Evaluation standard for permeability-

A: shorter than 1 second
B: 1 second or longer and shorter than 5 seconds
C: 5 seconds or longer and shorter than 10 seconds
D: 10 seconds or longer

**[Table 4]**

| | Electrolytic solution | | | Initial discharge capacity | Permeability to negative electrode | Permeability to positive electrode |
|---|---|---|---|---|---|---|
| | Polymer | Molecular weight of polymer | Content of polymer (% by mass) | | | |
| Example 1 | 1a | 10000 | 0.1 | B | B | B |
| Example 2 | 1a | 10000 | 0.5 | A | A | A |
| Example 3 | 1a | 10000 | 1.0 | A | A | A |
| Example 4 | 1a | 10000 | 3.0 | A | A | A |
| Example 5 | 1a | 10000 | 5.0 | B | B | B |
| Example 6 | 1b | 1000 | 1.0 | A | A | A |
| Example 7 | 1c | 50000 | 1.0 | A | A | A |
| Example 8 | 1d | 100000 | 1.0 | B | B | B |
| Example 9 | 1e | 150000 | 1.0 | C | C | C |
| Example 10 | 2 | 10000 | 1.0 | B | B | B |
| Example 11 | 3 | 10000 | 1.0 | C | C | C |
| Comparative Example 1 | 4 | 10000 | 1.0 | D | D | D |
| Comparative Example 2 | 5 | 10000 | 1.0 | D | D | D |
| Comparative Example 3 | - | - | - | D | D | D |
| Comparative Example 4 | 1a | 10000 | 7.5 | D | D | D |
| Comparative Example 5 | 1f | 200000 | 3.0 | D | D | D |

In all of the electrolytic solutions of Comparative Examples 1 and 2, containing the polymers 4 and 5 having an adsorption rate of less than 15% to acetylene black, the electrolytic solution of Comparative Example 3, not containing the polymer, the electrolytic solution of Comparative Example 4, having an excessively high content of the polymer, and the electrolytic solution of Comparative Example 5, containing a polymer having an excessively high weight-average molecular weight, the initial discharge capacity was less than 100 mAh/g in a case of being used in a secondary battery, and a secondary battery having a sufficient initial discharge capacity could not be obtained. In a case where these electrolytic solutions were used, it is considered that 15 minutes was insufficient for the electrolytic solution to permeate and settle in the entire electrode active material layer. In fact, in the permeability test for the above-described electrode, the electrolytic solutions of Comparative Examples 1 to 5 took 10 seconds or longer to disappear from the surface of the electrode active material layer.

On the other hand, in all of Examples 1 to 11 in which the electrolytic solution containing 0.1% to 5.0% by mass of the polymers 1a to 1e, 2, and 3 having an adsorption rate of 15% or more to acetylene black and a weight-average molecular weight of 1,000 to 150,000 was used, the initial discharge capacity was excellent in a case of being used in a secondary battery, and the permeability to the electrode was excellent.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2022-175036 filed in Japan on October 31, 2022, the contents of which are incorporated herein by reference, as a part of the description of the present specification.

### Explanation of References

10: non-aqueous electrolytic solution secondary battery
1: negative electrode collector
2: negative electrode active material layer
3: separator
4: positive electrode active material layer
5: positive electrode collector
6: operation portion (light bulb)

## Claims

1. An electrolytic solution for a non-aqueous electrolytic solution secondary battery, obtained by dissolving a lithium salt and a polymer (I) in a non-aqueous solvent,
wherein the polymer (I) has an adsorption rate of 15% or more to acetylene black and a weight-average molecular weight of 1,000 to 150,000, and
a content of the polymer (I) in the electrolytic solution is 0.1% to 5.0% by mass.

2. The electrolytic solution for a non-aqueous electrolytic solution secondary battery according to claim 1,
wherein the polymer (I) satisfies at least one of the following (a) to (d),
(a) aromatic ring content: 40% by mass or more,
(b) acid value: 30 mgKOH/g or more,
(c) amine value: 30 mgKOH/g or more,
(d) hydroxyl number: 30 mgKOH/g or more.

3. The electrolytic solution for a non-aqueous electrolytic solution secondary battery according to claim 2,
wherein the polymer (I) includes at least one of an amino group, a carboxy group, a phosphate group, a phosphonic acid group, a sulfo group, a hydroxy group, a carbamoyl group, or an aromatic group.

4. A non-aqueous electrolytic solution secondary battery comprising, in the following order:
a positive electrode;
a separator; and
a negative electrode,
wherein the electrolytic solution for a non-aqueous electrolytic solution secondary battery according to any one of claims 1 to 3 is used as an electrolytic solution.

5. The non-aqueous electrolytic solution secondary battery according to claim 4,
wherein at least one of a positive electrode active material layer or a negative electrode active material layer contains a carbonaceous material.

6. A manufacturing method of a non-aqueous electrolytic solution secondary battery, comprising:
permeating at least a positive electrode active material layer, a separator, and a negative electrode active material layer of an electrode laminate having a positive electrode, a separator, and a negative electrode in this order, with the electrolytic solution for a non-aqueous electrolytic solution secondary battery according to any one of claims 1 to 3.

7. The manufacturing method of a non-aqueous electrolytic solution secondary battery according to claim 6,
wherein at least one of the positive electrode active material layer or the negative electrode active material layer contains a carbonaceous material.
